# EUROPEAN PATENT APPLICATION

(11) **EP 4 847 371 A1**
(43) Date of publication of application: **02.12.2026**
(21) Application number: 25178686.9
(22) Date of filing: 26.05.2025
(51) Int. Cl.: B63H 5/125, B63H 5/08, B63H 21/17

(54) **MARINE POD DRIVE UNIT**

(71) Applicant: Volvo Penta Corporation, 405 08 Göteborg (SE)
(72) Inventor: BÄCK, Daniel, Göteborg (SE); MAGNUSSON, Henrik, Fjärås (SE); WESSMAN, Björn, Torslanda (SE)
(74) Representative: Ström & Gulliksson AB

(57) **Abstract**

The present disclosure relates to a marine POD drive unit for a marine vessel, comprising a housing, an axial flux electric motor being arranged inside the housing, the axial flux electric motor configured to generate rotational motion at a first rotational speed, a propeller configured to operate at a second rotational speed lower than the first rotational speed, a magnetic gear assembly positioned between the axial flux electric motor and the propeller, the magnetic gear assembly comprises a plurality of magnets, wherein the magnetic gear assembly is configured to transfer torque from the axial flux electric motor to the propeller while downshifting the rotational speed from the first rotational speed to the second rotational speed.

## Description

### TECHNICAL FIELD

The disclosure relates generally to propulsion of marine vessels. In particular aspects, the disclosure relates to a marine POD drive unit. The disclosure can be applied to marine vessels, such as sailboats, watercrafts, motorboats, work boats, sport vessels, boats, ships, among other vessel types. Although the disclosure may be described with respect to a particular marine vessel, the disclosure is not restricted to any particular marine vessel.

### BACKGROUND

The pursuit of efficient and effective marine propulsion systems has long been a central focus in naval architecture and marine engineering. Marine propulsion systems are critical for vessel performance, power efficiency, and environmental impact. Among the various propulsion technologies, POD drive units have emerged as a popular choice due to their maneuverability and hydrodynamic advantages.

Electric motors are increasingly favored as power sources in marine propulsion due to their potential for high efficiency, reduced emissions, and enhanced control capabilities. Modern electric motors, particularly those designed for high-performance applications, often operate most efficiently at elevated rotational speeds. However, propellers, the primary means of converting rotational energy into thrust, typically operate most effectively at significantly lower rotational speeds. This fundamental mismatch necessitates the use of a speed reduction mechanism to match the output characteristics of the electric motor to the operational requirements of the propeller.

Traditional speed reduction methods, such as mechanical gearing systems, have been widely employed for this purpose. While effective in reducing speed, these conventional solutions introduce several inherent drawbacks. Mechanical gears inevitably introduce friction, leading to energy losses and reduced overall system efficiency. Furthermore, the physical contact between gear teeth results in wear, requiring regular lubrication and maintenance, and limiting the lifespan of the propulsion system.

Another significant challenge associated with mechanical gearing is noise generation. The meshing of gear teeth creates acoustic noise that can be undesirable in marine environments, affecting passenger comfort and potentially impacting marine life. Moreover, conventional mechanical gearboxes often impose geometric constraints that limit the achievable speed ratios, hindering the ability to fully optimize both motor and propeller performance.

In addition to efficiency and noise concerns, the physical size and shape of the POD drive unit are also critical considerations. A larger POD diameter increases drag, reducing vessel speed and fuel efficiency. Therefore, it is desirable to minimize the size of the POD drive unit while maintaining high levels of performance. Prior art solutions often fail to provide a satisfactory balance between optimizing the yield and operation of the electric motor, ensuring the propeller shaft operates at its intended RPM, minimizing noise, and reducing the overall size of the POD unit. An improved solution is needed to address these challenges and achieve optimal performance in marine propulsion systems.

### SUMMARY

According to a first aspect of the disclosure, a marine POD drive unit for a marine vessel, comprising a housing, an axial flux electric motor being arranged inside the housing, the axial flux electric motor configured to generate rotational motion at a first rotational speed, a propeller configured to operate at a second rotational speed lower than the first rotational speed, a magnetic gear assembly positioned between the axial flux electric motor and the propeller, the magnetic gear assembly comprises a plurality of magnets, wherein the magnetic gear assembly is configured to transfer torque from the axial flux electric motor to the propeller while downshifting the rotational speed from the first rotational speed to the second rotational speed.

The first aspect of the disclosure may seek to solve a problem with the need for efficient speed reduction between a high-speed electric motor and a propeller in a marine POD drive unit, while also reducing mechanical wear, maintenance, and noise associated with traditional gearing systems. It also addresses the geometric limitations of conventional gearboxes, enabling higher and more flexible speed ratios.

A technical benefit may include enhanced efficiency and higher speed ratios without geometric limitations, reduced maintenance and improved reliability due to the elimination of mechanical contact and consequent wear, and enhanced performance in marine propulsion applications.

Optionally in some examples, including in at least one preferred example, the axial flux electric motor comprises an output shaft. A technical benefit may include providing a direct and mechanically simple connection point for the magnetic gear assembly, facilitating efficient torque transfer.

Optionally in some examples, including in at least one preferred example, the propeller is connected to a propeller shaft or a hub. A technical benefit may include allowing for flexibility in propeller design and attachment, accommodating different propeller types and sizes.

Optionally in some examples, including in at least one preferred example, the magnetic gear assembly is arranged between the output shaft and the propeller shaft or hub. A technical benefit may include providing a compact and integrated drive system, minimizing the overall size of the POD unit.

Optionally in some examples, including in at least one preferred example, the magnetic gear assembly is an axial magnetic gear, comprising coaxially aligned rotors with magnets oriented axially to enable torque transfer. A technical benefit may include achieving a high torque density and efficient speed reduction in a compact axial configuration.

Optionally in some examples, including in at least one preferred example, the axial magnetic gear assembly comprises a first rotor connected to the axial flux electric motor and a second rotor connected to the propeller, with a modulator positioned between the first and second rotors. A technical benefit may include providing a robust and efficient torque transfer mechanism, allowing for precise control over the speed reduction ratio.

Optionally in some examples, including in at least one preferred example, further comprising a control unit. A technical benefit may include enabling automated adjustment of the propulsion system based on sensor feedback, optimizing performance and efficiency.

Optionally in some examples, including in at least one preferred example, the control unit is configured to adjust the magnetic field strength of the magnetic gear assembly to optimize torque transfer efficiency based on operational conditions. A technical benefit may include maximizing the efficiency of the propulsion system across a range of operating conditions.

Optionally in some examples, including in at least one preferred example, the magnetic gear assembly comprises a magnetic field modulation mechanism to dynamically control the magnetic coupling between the axial flux electric motor and the propeller. A technical benefit may include enabling precise control over the speed reduction ratio and torque output of the gear assembly.

Optionally in some examples, including in at least one preferred example, the magnetic gear assembly is a radial magnetic gear, comprising inner and outer rotors with magnets oriented radially to facilitate the torque transfer. A technical benefit may include providing a compact and efficient means of transmitting torque through magnetic interaction.

Optionally in some examples, including in at least one preferred example, the radial magnetic gear assembly further comprises a modulator with ferromagnetic pole pieces positioned between the inner and outer rotors to modulate the magnetic field. A technical benefit may include enhancing the magnetic field interaction between the rotors and improving the overall torque transmission capability of the gear assembly.

Optionally in some examples, including in at least one preferred example, the ferromagnetic pole pieces are shaped to minimize torque ripple. A technical benefit may include ensuring smoother power delivery to the propellers, reducing vibration and noise in the propulsion system.

Optionally in some examples, including in at least one preferred example, the inner rotor is directly connected to the output shaft of the axial flux electric motor and the outer rotor is directly connected to the propeller, the propeller shaft or the hub. A technical benefit may include simplifying the mechanical design and providing a direct and efficient torque path.

Optionally in some examples, including in at least one preferred example, the magnetic gear assembly is configured to provide a gear ratio of at least 10:1. A technical benefit may include providing a significant speed reduction from the power source to the propellers, optimizing propeller efficiency.

Optionally in some examples, including in at least one preferred example, the radially magnetic gear assembly is a floating field-modulated magnetic gear set. A technical benefit may include allowing for slight axial and radial displacement between the rotors, accommodating thermal expansion, manufacturing tolerances, and operational deflections, thereby enhancing robustness and longevity.

Optionally in some examples, including in at least one preferred example, further comprising a forward propeller having a first shaft, and an aft propeller having a second shaft, the propellers being driven by the axial flux electric motor where the floating field-modulated magnetic gear set is arranged between the output shaft and the first and second shafts, where the field-modulated magnetic gear set comprises the inner rotor, the outer rotor and a third rotor arranged between the inner and outer rotors, wherein the output shaft is connected to one of the rotors and the first shaft and the second shaft are connected to the other rotors. A technical benefit may include improved vessel performance through optimized propulsion efficiency, reduced lifecycle costs due to lower maintenance needs, and enhanced passenger comfort resulting from quieter operation.

Optionally in some examples, including in at least one preferred example, where the inner rotor is equipped with first permanent magnets, the outer rotor is equipped with second permanent magnets, and the third rotor is equipped with pole pieces. A technical benefit may include providing a reliable and efficient means of transmitting torque through magnetic interaction, eliminating direct mechanical contact and reducing wear.

Optionally in some examples, including in at least one preferred example, where the inner rotor is equipped with 2P1 permanent magnets, the outer rotor is equipped with 2P2 permanent magnets, and the third rotor is equipped with P3 pole pieces. A technical benefit may include defining a precise magnetic pole arrangement for optimized gear ratio and torque transmission characteristics.

Optionally in some examples, including in at least one preferred example, where the third rotor is configured to modulate the magnetic fields between the inner and outer rotors. A technical benefit may include enabling efficient torque transfer between the rotors without direct mechanical contact, reducing wear and maintenance.

Optionally in some examples, including in at least one preferred example, where an intrinsic gear ratio Gr is defined by Gr=P3/P1, wherein P3=P1+P2. A technical benefit may include establishing a clear relationship between the number of poles and pole pieces for predictable and efficient gear operation.

According to a second aspect of the disclosure, a marine vessel comprising a marine POD drive unit as disclosed herein. The second aspect of the disclosure may seek to solve a problem with the integration of an efficient and reliable propulsion system within a marine vessel, optimizing space utilization while minimizing noise and maintenance requirements. These are related to general challenges for propulsion systems in marine vessels. A technical benefit may include improved vessel performance through optimized propulsion efficiency, reduced lifecycle costs due to lower maintenance needs, and enhanced passenger comfort resulting from quieter operation.

According to a third aspect of the disclosure, a method for propelling a marine vessel, comprising:
- arranging an axial flux electric motor inside a housing of a marine POD drive unit, the axial flux electric motor configured to generate rotational motion at a first rotational speed;
- configuring a propeller to operate at a second rotational speed lower than the first rotational speed;
- positioning a magnetic gear assembly comprising a plurality of magnets between the axial flux electric motor and the propeller within the housing; and
- transferring torque from the axial flux electric motor to the propeller via the magnetic gear assembly, while downshifting the rotational speed from the first rotational speed to the second rotational speed.

The third aspect of the disclosure may seek to solve a problem with providing a method for efficient and controllable marine propulsion that minimizes energy losses and mechanical wear. This addresses the challenges of achieving precise speed and torque control in marine environments while ensuring long-term reliability and reduced environmental impact.

A technical benefit may include enhanced propulsion efficiency through optimized power transmission, extended operational lifespan due to minimized mechanical wear, and reduced energy consumption resulting in lower emissions and operational costs.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary marine POD drive unit according to an example.
**FIG. 2** is another exemplary marine POD drive unit according to an example.
**FIG. 3** is an exemplary magnetic gear assembly according to an example.
**FIGS. 4-6** are other exemplary marine POD drive units.
**FIG. 7** is another exemplary magnetic gear assembly according to an example.
**FIG. 8** is a marine vessel.

### DETAILED DESCRIPTION

The detailed description set forth below provides information and examples of the disclosed technology with sufficient detail to enable those skilled in the art to practice the disclosure.

The disclosed technology addresses long-standing challenges in marine propulsion systems, particularly those related to POD drive units. Existing solutions often struggle to efficiently match the high rotational speeds of modern electric motors with the lower speeds required by propellers, leading to suboptimal performance, excessive noise, and increased maintenance. The disclosed invention seeks to overcome these limitations by providing an improved marine POD drive unit that optimizes energy efficiency, reduces noise, and extends operational lifespan.

The core of the disclosure lies in the integration of a magnetic gear assembly within the POD drive unit. Unlike traditional mechanical gearboxes, which rely on physical contact between gear teeth, the magnetic gear assembly utilizes magnetic fields to transfer torque and reduce speed. This assembly comprises a plurality of magnets strategically arranged to facilitate non-contact power transmission. This non-contact approach eliminates friction, significantly reducing energy losses and improving overall system efficiency.

Further enhancing the disclosure's capabilities, the magnetic gear assembly is designed to downshift the rotational speed from the high-speed electric motor to the optimal speed range for the propeller. This speed reduction is achieved without the need for complex mechanical components, allowing for a more compact and streamlined POD unit design. The result is a more hydrodynamically efficient POD unit, reducing drag and improving vessel maneuverability.

The advantages of the disclosed technology extend beyond efficiency and size. By eliminating physical contact between moving parts, the magnetic gear assembly significantly reduces wear and tear, minimizing the need for regular lubrication and maintenance. This translates to lower operational costs and increased system reliability. Moreover, the non-contact nature of the magnetic gear assembly results in significantly reduced noise levels compared to traditional mechanical gearboxes, enhancing passenger comfort and minimizing disturbance to marine ecosystems.

The disclosure surpasses the limitations of prior art solutions by offering a more efficient, reliable, and environmentally conscious alternative to traditional mechanical gearboxes. It provides a solution that optimizes the yield and operation of the electric motor, ensures the propeller shaft operates at its intended RPM, minimizes noise, and reduces the overall size of the POD unit, leading to improved performance and sustainability in marine propulsion systems.

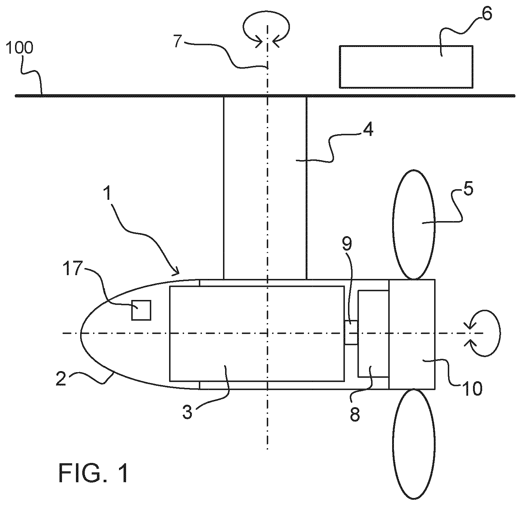

**FIG. 1** is an exemplary marine POD drive unit **1** for a marine vessel **100.** The POD drive unit **1** comprises a housing **2** being submerged in the water during operation. The POD drive unit **1** further comprising an axial flux electric motor **3.** The marine POD drive unit **1** according to the disclosure is a propulsion system utilized in maritime vessels, operating fully submerged beneath the waterline to provide thrust and superior maneuverability. This POD drive unit **1** is characterized by its integration of the axial flux electric motor 3 encapsulated within a streamlined pod structure, i.e. housing 2. The encapsulation minimizes hydrodynamic drag, enhancing the vessel's efficiency as it moves through the water.

Additionally, the use of the axial flux electric motor **3** within POD drive units offers compact and efficient power delivery, directly transmitting rotational force to the propeller. The control of the POD drive unit 1, which may include automated or manual inputs, further differentiates it by enabling real-time adjustments to motor speeds and propeller speeds, based on navigational needs and vessel data.

Under operation, the POD drive unit's 1 submerged position significantly reduces noise and vibrations compared to stern drives and outboards, enhancing onboard comfort and reducing environmental disturbances.

In **FIG. 1****,** the POD drive unit **1** is connected to the marine vessel **100** via a fin 4 so that the POD drive unit **1** may be positioned a distance from a hull of the marine vessel **100** so that the rotation of the propeller **5** do not interfere with the hull, and a more enhanced flow around the POD drive unit **1** may be obtained. In addition, the POD drive unit **1** may be retractable into the hull of the marine vessel **100** when not in use or it may be arranged permanent in the intended position under the hull.

The housing **2** may comprise a streamlined outer contour to reduce hydrodynamic drag of the entire POD drive unit **1.** A technical benefit may include improved vessel speed and decreased power consumption by minimizing resistance through water.

The axial flux electric motor **3** may be arranged in front of the propeller **5** where the propeller **5** is configured to push the marine vessel **100** as seen in **FIG. 1****.** In another example, the axial flux electric motor **3** may be arranged behind the propeller **5** where the propeller **5** is configured to pull the marine vessel **100.**

Furthermore, the axial flux electric motor **3** may be a permanent magnet synchronous motor. A technical benefit may include delivering high efficiency and reduced size and weight, optimizing power output and contributing to compact and efficient propulsion system design. The permanent magnet synchronous motor **3** may comprise rare-earth magnets. A technical benefit may include providing superior magnetic properties and efficiency, enhancing motor performance and reducing energy consumption for prolonged operational periods. Also, the axial flux electric motor **3** is arranged within the housing **2.** A technical benefit may include providing a compact and integrated design, reducing system footprint. In addition, by the present disclosure only one motor is necessary for the rotation of

Moreover, the POD drive unit **1** may further comprise a power supply **6** for the axial flux electric motor **3.** A technical benefit may include reliable and consistent power delivery, ensuring uninterrupted propulsion performance. The power supply **6,** such as a battery pack, may be arranged on the marine vessel **100.** A redundant power supply for the axial flux electric motor may also be arranged on the marine vessel. A technical benefit may include enhanced reliability and operational security, providing backup power in case of primary power supply failure.

In addition, the POD drive unit **1** may be rotatably connected with the marine vessel **100.** A technical benefit may include increased maneuverability and flexibility, allowing for dynamic positioning and orientation of the propulsion system. The POD drive unit **1** may be rotated around the propulsion rotation axis **7** as seen in **FIG. 1****,** so that the POD drive unit **1** may be used to steer and maneuver the marine vessel.

The axial flux electric motor 3 is configured to generate rotational motion at a first rotational speed, the propeller 5 is configured to operate at a second rotational speed lower than the first rotational speed. The marine POD drive unit 1 further comprises a magnetic gear assembly 8 positioned between the axial flux electric motor 3 and the propeller 5, the magnetic gear assembly 8 comprises a plurality of magnets, wherein the magnetic gear assembly is configured to transfer torque from the axial flux electric motor 2 to the propeller 5 while downshifting the rotational speed from the first rotational speed to the second rotational speed. Hereby is obtained an enhanced efficiency and higher speed ratios without geometric limitations, reduced maintenance and improved reliability due to the elimination of mechanical contact and consequent wear, and enhanced performance in marine propulsion applications. The axial flux electric motor 3 comprises an output shaft 9. In addition, the propeller 5 is connected to a propeller shaft or a hub. In **FIG. 1****,** the propeller 5 is connected with a hub 10. The magnetic gear assembly 8 is arranged between the output shaft 9 and the propeller shaft or hub 10. A technical benefit may include providing a compact and integrated drive system, minimizing the overall size of the POD unit 1.

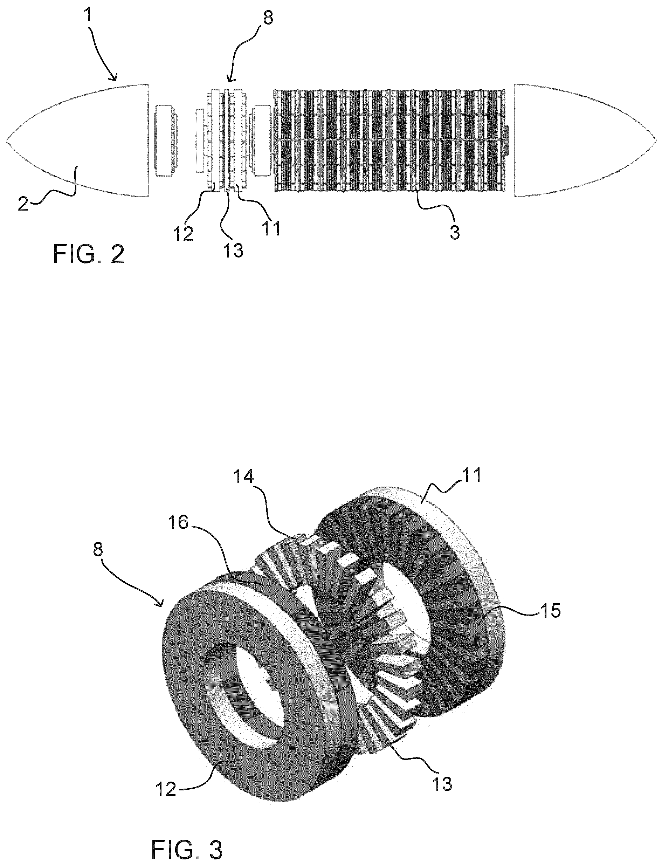

In **FIG. 2****,** the marine POD drive unit 1 is shown without the propeller. The axial flux electric motor 2 is arranged adjacent to the magnetic gear assembly 8. In the example, the magnetic gear assembly 8 is an axial magnetic gear assembly 8, comprising coaxially aligned rotors with magnets oriented axially to enable torque transfer. A technical benefit may include achieving a high torque density and efficient speed reduction in a compact axial configuration. In the example, the axial magnetic gear assembly 8 comprises a first rotor 11 connected to the axial flux electric motor 2 and a second rotor 12 connected to the propeller, with a modulator 13 positioned between the first and second rotors 11, 12. A technical benefit may include providing a robust and efficient torque transfer mechanism, allowing for precise control over the speed reduction ratio.

As seen in **FIG. 3****,** the modulator 13 may comprise ferromagnetic pole pieces 14 arranged to modulate the magnetic field and facilitate torque transfer between the first and second rotors 11, 12. A technical benefit may include enhancing the magnetic field interaction between the rotors and improving the overall torque transmission capability of the gear assembly. The ferromagnetic pole pieces 14 may be interconnected by bridges to enhance mechanical stiffness. A technical benefit may include increasing the structural integrity of the modulator, preventing deformation and ensuring consistent performance under high torque loads.

The first rotor 11 is equipped with first permanent magnets 15, the second rotor 12 is equipped with second permanent magnets 16, and the modulator 13 is equipped with pole pieces 14. The magnets 15, 16 in the axial magnetic gear assembly 8 may be arranged in a Halbach array to enhance magnetic field strength and efficiency of torque transfer. A technical benefit may include maximizing the magnetic flux density and improving the torque transmission capability of the gear assembly.

Also, the magnets 15, 16 in the axial magnetic gear assembly 8 may be surface-mounted permanent magnets. A technical benefit may include simplifying the manufacturing process and reducing the cost of the magnetic gear assembly. In another example, the magnets 15, 16 in the axial magnetic gear assembly 8 may be interior permanent magnets. A technical benefit may include protecting the magnets from environmental factors and centrifugal forces, increasing the reliability and lifespan of the gear assembly.

In an example, the axial magnetic gear assembly 8 may be designed to maintain consistent magnetic coupling despite minor misalignments between the axial flux electric motor 3 and the propeller, the propeller shaft or the hub. A technical benefit may include improving system reliability and reducing the impact of installation imperfections.

Furthermore, the axial magnetic gear 8 is a floating field-modulated magnetic gear set 8. A technical benefit may include allowing for slight axial and radial displacement between the rotors, accommodating thermal expansion, manufacturing tolerances, and operational deflections, thereby enhancing robustness and longevity.

In the context of the present disclosure, the term "floating" as applied to the field-modulated magnetic gear set signifies a specific operational characteristic wherein the rotational speed of the propeller(s) is/are not directly or actively controlled by the system's control mechanisms. Instead, the speed of the propeller is primarily determined by the hydrodynamic resistance encountered by the propeller as it interacts with the surrounding water. This resistance is influenced by factors such as the vessel's speed, water density, propeller pitch, and any disturbances in the water flow.

The floating field-modulated magnetic gear set acts as a passive torque splitter and speed adapter, efficiently transmitting power from the power source to the propeller while allowing the propeller to independently seek its equilibrium speed based on its experienced resistance. This is achieved through the inherent properties of the magnetic gear set, which allows for a degree of slip or differential speed between the rotors connected to the propeller. The same applies if several propellers are arranged.

Unlike traditional gear systems with fixed gear ratios, the floating magnetic gear does not rigidly enforce a specific speed relationship between the propellers. Instead, it magnetically couples the propellers to the power source, allowing for a self-adjusting speed differential. This is particularly advantageous in marine applications where propellers may experience varying loads due to asymmetrical water flow, turning maneuvers, or changes in vessel trim.

The floating characteristic is achieved through a combination of design parameters, including the magnetic material properties, air gap dimensions, and the number of magnetic poles and pole pieces on each rotor. These parameters are carefully selected to provide a balance between efficient torque transmission and the desired degree of speed freedom for the propellers. This allows for the propellers to "float" within a certain speed range, self-optimizing their performance based on the external hydrodynamic conditions.

This "floating" functionality is analogous to the behavior of the previously employed "floating" planetary gear set, where the propellers were also allowed to self-adjust their speeds based on hydrodynamic resistance. The floating magnetic gear set, however, offers the additional benefits of reduced friction, wear, and noise compared to its mechanical counterpart, while still maintaining the desired operational characteristic of passively adapting to varying propeller loads.

The article "A review on the field-modulated magnetic gears: Development status, potential applications, and existent challenges" by Yan, Li, Wang and Yang published in IET Electric Power Applications 2024;18:1-19, describes the functionality of field-modulated magnetic gears, and the article is incorporated by reference.

The floating field-modulated magnetic gear set 8 may be configured to minimize losses associated with high-RPM input from the axial flux electric motor. A technical benefit may include maintaining high overall system efficiency by reducing energy dissipation in the magnetic gear set.

In an example, the axial magnetic gear assembly 8 may comprise a high-temperature superconductor material to enhance magnetic field modulation. A technical benefit may include increasing the magnetic flux density and improving torque transmission capability.

As seen in **FIG. 1****,** the marine POD drive unit 1 may further comprise a control unit 17. A technical benefit may include enabling automated adjustment of the propulsion system based on sensor feedback, optimizing performance and efficiency. The control unit 17 may include a microprocessor, microcontroller, programmable digital signal processor or another programmable device. The control unit 17 may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device

Furthermore, the control unit 17 may be configured to adjust the magnetic field strength of the magnetic gear assembly 8 to optimize torque transfer efficiency based on operational conditions. A technical benefit may include maximizing the efficiency of the propulsion system across a range of operating conditions. Also, the control unit 17 may adjust the magnetic field strength by controlling the current in electromagnets positioned adjacent to the permanent magnets in the magnetic gear assembly. A technical benefit may include providing a precise and responsive means of controlling the magnetic field strength.

In an example, the magnetic gear assembly 8 may include a flux concentrator to direct magnetic fields and increase the efficiency of torque transfer from the axial flux electric motor 3 to the propeller 5. A technical benefit may include enhancing the magnetic flux density in the air gap, improving the torque transmission capability of the gear assembly. The flux concentrator may be made of a material with high magnetic permeability to enhance the focusing of magnetic fields. A technical benefit may include maximizing the effectiveness of the flux concentrator, further improving the torque transmission capability.

In another example, the magnetic gear assembly 8 may comprise a magnetic field modulation mechanism to dynamically control the magnetic coupling between the axial flux electric motor and the propeller. A technical benefit may include enabling precise control over the speed reduction ratio and torque output of the gear assembly. The magnetic field modulation mechanism may comprise a variable reluctance structure. A technical benefit may include providing a simple and reliable means of modulating the magnetic field. Also, the magnetic field modulation mechanism may comprise a magnet arrangement that allows for adjustable overlapping areas between the magnets of the different rotors. A technical benefit may include providing a fine-grained control over the magnetic field modulation.

Moreover, the magnetic gear assembly may comprise adjustable magnet positions to allow for variable gear ratios depending on the operational requirements. A technical benefit may include enabling the propulsion system to adapt to varying load conditions and optimize performance across a range of operating speeds.

In an example, the magnetic gear assembly 8 may further comprise a cooling system to dissipate heat generated during operation. A technical benefit may include maintaining optimal operating temperatures and preventing overheating, ensuring reliable performance and longevity of the gear assembly. The cooling system may utilize a liquid coolant circulated through channels within the magnetic gear assembly. A technical benefit may include providing effective and uniform cooling throughout the gear assembly.

In another example, the magnetic gear assembly 8 is a radial magnetic gear 8, comprising inner and outer rotors 18, 19 with magnets oriented radially to facilitate the torque transfer. A technical benefit may include providing a compact and efficient means of transmitting torque through magnetic interaction. The radial magnetic gear assembly 8 may further comprise a modulator 13 with ferromagnetic pole pieces positioned between the inner and outer rotors 18, 19to modulate the magnetic field. A technical benefit may include enhancing the magnetic field interaction between the rotors and improving the overall torque transmission capability of the gear assembly. The ferromagnetic pole pieces may be shaped to minimize torque ripple. A technical benefit may include ensuring smoother power delivery to the propellers, reducing vibration and noise in the propulsion system.

Also, the magnets on the inner and outer rotors 18, 19 may be arranged in a Halbach array to enhance the magnetic field strength and increase torque density. A technical benefit may include maximizing the magnetic flux density and improving the torque transmission capability of the gear assembly.

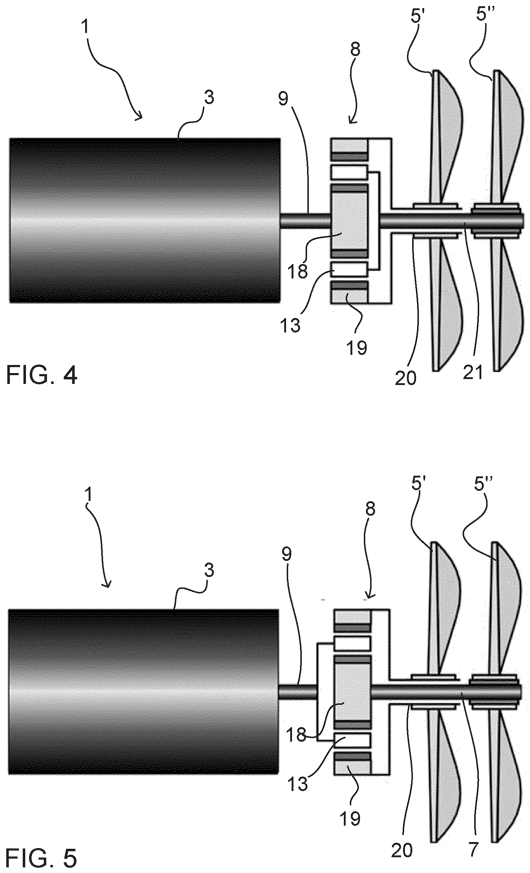

**In** **FIGS. 4-6****,** other examples of the marine POD drive unit 1 is shown. The POD drive unit 1 comprises a forward propeller 5' having a first shaft 20, and an aft propeller 5" having a second shaft 21, the propellers 5', 5'' being driven by the axial flux electric motor 3 where the floating field-modulated magnetic gear set 8 is arranged between the output shaft 9 and the first and second shafts 20,21, where the field-modulated magnetic gear set 8 comprises the inner rotor 18, the outer rotor and 19 a third rotor or modulator 13 arranged between the inner and outer rotors 20, 21, wherein the output shaft 9 is connected to one of the rotors 18, 19, 13 and the first shaft 20 and the second shaft 21 are connected to the other rotors. A technical benefit may include improved vessel performance through optimized propulsion efficiency, reduced lifecycle costs due to lower maintenance needs, and enhanced passenger comfort resulting from quieter operation. The forward propeller and the aft propeller may be counter-rotating.

In the example of **FIG. 4****,** the output shaft 9 is connected with the inner rotor 18, the first shaft 20 is connected with the outer rotor 19 and the second shaft 21 is connected with the third rotor 13.

In the example of **FIG. 5****,** the output shaft 9 is connected with the third rotor 13, the first shaft 20 is connected with the outer rotor 19 and the second shaft 21 is connected with the inner rotor 18.

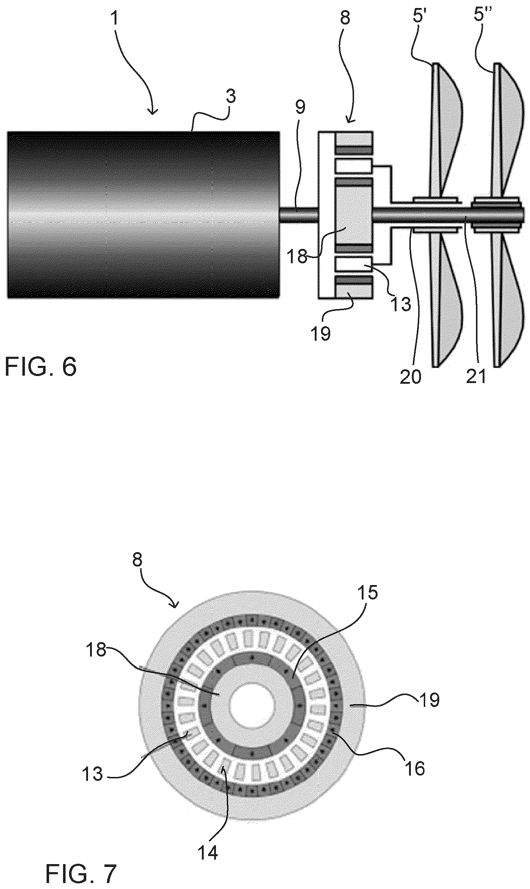

In the Example of **FIG. 6****,** the output shaft 9 is connected with the outer rotor 19, the first shaft 20 is connected with the third rotor 13 and the second shaft 21 is connected with the inner rotor 18.

As indicated in **FIGS. 4-6****,** the field-modulated magnetic gear set 8 may be connected in different ways to the output shaft 9 and the first shaft 20 and the second shaft 21, respectively. This have the advantage that the field-modulated magnetic gear set 8 may be designed for different torque and speed characteristics as well as for different set of performance trade-offs. The housing of the POD drive unit is not shown in **FIGS. 4-6****.**

Furthermore, as shown in **FIG. 7****,** the inner rotor 9 is equipped with first permanent magnets 12, the outer rotor 10 is equipped with second permanent magnets 13, and the third rotor 11 is equipped with pole pieces 14. A technical benefit may include providing a reliable and efficient means of transmitting torque through magnetic interaction, eliminating direct mechanical contact and reducing wear. In an example, the first permanent magnets 13 and the second permanent magnets 14 are rare-earth magnets. A technical benefit may include maximizing magnetic flux density, resulting in higher torque transmission capability and improved overall gear set performance.

In an example, the inner rotor 18 is equipped with 2P1 permanent magnets 15, the outer rotor 19 is equipped with 2P2 permanent magnets 16, and the third rotor 13 or manipulator is equipped with P3 pole pieces 14. A technical benefit may include defining a precise magnetic pole arrangement for optimized gear ratio and torque transmission characteristics. Moreover, 2P1 permanent magnets and 2P2 permanent magnets are selected to optimize torque density for a specific operational speed of the propellers 5', 5". A technical benefit may include tailoring the magnetic gear set to deliver maximum torque at a desired propeller speed, enhancing propulsion efficiency.

In an example, P3 pole pieces may be selected to minimize torque ripple. A technical benefit may include ensuring smoother power delivery to the propellers, reducing vibration and noise in the propulsion system. Also, the pole pieces 14 on the third rotor 13 may be skewed to reduce cogging torque. A technical benefit may include minimizing torque ripple and vibration, resulting in smoother and quieter operation.

Moreover, the third rotor 13 may comprise a high-temperature superconductor material to enhance magnetic field modulation. A technical benefit may include increasing the magnetic flux density and improving torque transmission capability.

The magnetic gear assembly 8 may be configured to provide a gear ratio of at least 10:1. A technical benefit may include providing a significant speed reduction from the power source to the propellers, optimizing propeller efficiency.

Furthermore, the third rotor 13 is configured to modulate the magnetic fields between the inner and outer rotors 18, 19. A technical benefit may include enabling efficient torque transfer between the rotors without direct mechanical contact, reducing wear and maintenance.

In addition, an intrinsic gear ratio Gr is defined by Gr=P3/P1, wherein P3=P1+P2. A technical benefit may include establishing a clear relationship between the number of poles and pole pieces for predictable and efficient gear operation. The intrinsic gear ratio Gr may be dynamically adjustable. A technical benefit may include allowing the propulsion system to adapt to varying load conditions, optimizing efficiency across a range of operating speeds.

In the context of the marine propulsion system described herein, the "gear ratio" (often denoted as G) is defined as the absolute value of the ratio between the rotational speed of the power source's output shaft 3 and the rotational speed of the first and second shafts 5, 7 when these two shafts rotate at equal speeds but in opposite directions. This "gear ratio" (G) is distinct from, but directly related to, the "intrinsic gear ratio" (Gr) of the field-modulated magnetic gear set. The specific relationship between G and Gr depends on the chosen configuration of the propulsion system, particularly which rotor (inner, outer, or third) is connected to the output shaft and which are connected to the propeller shafts. However, a dynamic change in the intrinsic gear ratio (Gr) will directly result in a corresponding change in the effective "gear ratio" (G) of the overall propulsion system, enabling dynamic control of propeller speeds and thrust.

In addition, an advantage of the floating field-modulated magnetic gear set is its ability to accommodate a scenario where one of the propellers is completely immobilized, such as when it becomes entangled in a net or other obstruction. In such an event, the "floating" design characteristic allows the other propeller to continue rotating and providing thrust, albeit at a potentially reduced efficiency.

This ability to function with one propeller stationary is a significant safety and operational advantage. It allows the vessel to maintain some degree of maneuverability and propulsion in emergency situations, providing time to address the obstruction without completely losing control. The magnetic gear set acts as an inherent overload protection mechanism, preventing catastrophic failure and ensuring the continued operation of at least one propeller. Importantly, the system is designed to handle this condition without requiring immediate intervention or adjustments to the power source. The magnetic gear set passively adapts to the changed load conditions, allowing the remaining propeller to continue providing thrust while minimizing stress on the system components. This robustness and fault tolerance are critical for ensuring the reliability and safety of marine vessels operating in challenging environments.

In certain aspects of the disclosed technology, the marine POD drive unit incorporates ceramic bearings to support the rotating components, specifically addressing the absence of a direct physical connection between the propeller and the electric motor. These ceramic bearings may be strategically positioned to provide smooth, low-friction support for the propeller shaft or hub, as well as for the rotating elements within the magnetic gear assembly.

The selection of ceramic bearings is driven by their superior material properties compared to traditional steel bearings. Ceramic bearings exhibit significantly lower friction coefficients, reducing energy losses and improving overall system efficiency. Their inherent hardness and resistance to wear contribute to extended operational lifespan and reduced maintenance requirements. Furthermore, ceramic materials are non-conductive, mitigating the risk of electrical arcing or corrosion in the marine environment. These ceramic bearings may be carefully positioned to support the axial and radial loads experienced by the rotating components. For instance, ceramic bearings may be integrated into the propeller shaft or hub assembly to provide smooth and stable rotation, minimizing vibration and wear. Likewise, ceramic bearings may be incorporated into the magnetic gear assembly to support the inner rotor, outer rotor, and modulator, ensuring precise alignment and low-friction operation.

The strategic use of ceramic bearings enhances the overall performance and reliability of the marine POD drive unit, contributing to increased energy efficiency, reduced maintenance, and extended operational lifespan.

To mitigate the detrimental effects of marine growth on the POD drive unit's performance and longevity, certain aspects of the disclosed technology incorporate a copper coating on the housing. Marine growth, such as barnacles, algae, and other organisms, can accumulate on submerged surfaces, increasing drag, reducing efficiency, and accelerating corrosion. Applying a layer of copper, or a copper-containing alloy, to the POD drive unit's housing offers an effective means of inhibiting marine growth. Copper possesses inherent anti-fouling properties, as the release of copper ions into the surrounding water creates an environment that is inhospitable to many marine organisms. This inhibits their attachment and growth on the coated surface. The copper coating can be applied using various techniques, such as electroplating, thermal spraying, or cladding, depending on the specific material and application requirements. The coating thickness is carefully controlled to provide adequate anti-fouling protection while minimizing any potential impact on the structural integrity or weight of the POD drive unit.

By incorporating a copper coating, the disclosed technology reduces the need for frequent cleaning and maintenance, lowers drag, improves fuel efficiency, and extends the operational lifespan of the marine POD drive unit. This contributes to reduced operational costs and enhanced overall performance in marine environments.

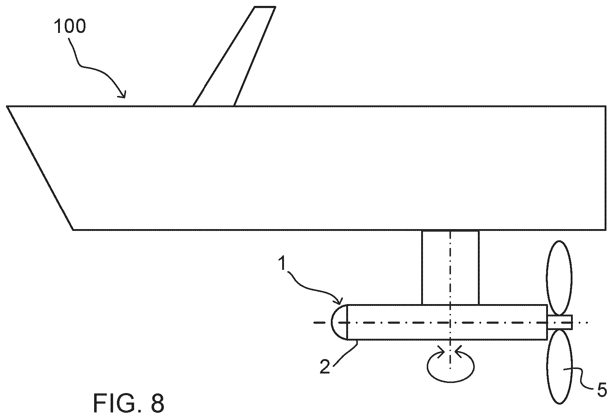

In **FIG. 8****,** the marine POD drive unit 1 is arranged on a marine vessel 100. The present disclosure also relates to a marine vessel 100 comprising the marine POD drive unit 1 as disclosed herein.

In addition to the structural aspects of the disclosed technology, the present disclosure also relates to a method for effectively propelling a marine vessel 100. The method initiates with the arrangement of an axial flux electric motor 3 inside the housing 2 of a marine POD drive unit 1. The axial flux electric motor 3 is configured to generate rotational motion at a first rotational speed. The method continues with configuring a propeller 5 to operate at a second rotational speed that is lower than the first rotational speed. The method also deals with positioning a magnetic gear assembly 8 comprising a plurality of magnets between the axial flux electric motor and the propeller inside the housing. This is followed by transferring torque from the axial flux electric motor to the propeller via the magnetic gear assembly, while downshifting the rotational speed from the first rotational speed to the second rotational speed. Through the method described, a marine vessel 100 is propelled with increased efficiency.

Certain aspects and variants of the disclosure are set forth in the following examples numbered consecutive below.

Example 1: A marine POD drive unit (1) for a marine vessel (100), comprising a housing (2), an axial flux electric motor (3) being arranged inside the housing (2), the axial flux electric motor configured to generate rotational motion at a first rotational speed, a propeller (5) configured to operate at a second rotational speed lower than the first rotational speed, a magnetic gear assembly (8) positioned between the axial flux electric motor and the propeller, the magnetic gear assembly comprises a plurality of magnets (15, 16), wherein the magnetic gear assembly (8) is configured to transfer torque from the axial flux electric motor (3) to the propeller (5) while downshifting the rotational speed from the first rotational speed to the second rotational speed.

Example 2: The marine POD drive unit (1) of example 1, wherein the axial flux electric motor (3) comprises an output shaft (9).

Example 3: The marine POD drive unit (1) of any of the examples 1-2, wherein the propeller (5) is connected to a propeller shaft or a hub (10).

Example 4: The marine POD drive unit (1) of any of the examples 1-3, wherein the magnetic gear assembly (8) is arranged between the output shaft (9) and the propeller shaft or hub (10).

Example 5: The marine POD drive unit (1) of any of the examples 1-4, wherein the magnetic gear assembly (8) is an axial magnetic gear assembly (8), comprising coaxially aligned rotors (11, 12) with magnets (15, 16) oriented axially to enable torque transfer.

Example 6: The marine POD drive unit (1) of example 5, wherein the axial magnetic gear assembly (8) comprises a first rotor (11) connected to the axial flux electric motor (3) and a second rotor (12) connected to the propeller, with a modulator (13) positioned between the first and second rotors.

Example 7: The marine POD drive unit (1) of example 6, wherein the modulator (13) comprises ferromagnetic pole pieces (14) arranged to modulate the magnetic field and facilitate torque transfer between the first and second rotors (11, 12).

Example 8: The marine POD drive unit (1) of example 7, wherein the ferromagnetic pole pieces (14) are interconnected by bridges to enhance mechanical stiffness.

Example 9: The marine POD drive unit (1) of any of the examples 5-8, wherein the magnets (15, 16) in the axial magnetic gear assembly (8) are arranged in a Halbach array to enhance magnetic field strength and efficiency of torque transfer.

Example 10: The marine POD drive unit (1) of any of the examples 5-9, wherein the magnets (15, 16) in the axial magnetic gear assembly (8) are surface-mounted permanent magnets.

Example 11: The marine POD drive unit (1) of any of the examples 5-9, wherein the magnets in (15, 16) the axial magnetic gear assembly are interior permanent magnets.

Example 12: The marine POD drive unit (1) of any of the examples 5-11, wherein the axial magnetic gear (8) is designed to maintain consistent magnetic coupling despite minor misalignments between the axial flux electric motor and the propeller, the propeller shaft or the hub.

Example 13: The marine POD drive unit (1) of any of the examples 5-12, wherein the axial magnetic gear is a floating field-modulated magnetic gear set (8).

Example 14: The marine POD drive unit (1) of example 13, wherein the floating field-modulated magnetic gear set (8) is configured to minimize losses associated with high-RPM input from the axial flux electric motor (3).

Example 15: The marine POD drive unit (1) of any of the examples 5-14, wherein the axial magnetic gear (8) comprises a high-temperature superconductor material to enhance magnetic field modulation.

Example 16: The marine POD drive unit (1) of any of the examples 1-15, further comprising a control unit (17).

Example 17: The marine POD drive unit (1) of example 16, wherein the control unit (17) is configured to adjust the magnetic field strength of the magnetic gear assembly (8) to optimize torque transfer efficiency based on operational conditions.

Example 18: The marine POD drive unit (1) of example 16, wherein the control unit (17) adjusts the magnetic field strength by controlling the current in electromagnets positioned adjacent to the permanent magnets in the magnetic gear assembly.

Example 19: The marine POD drive unit (1) of any of the examples 1-18, wherein the magnetic gear assembly (8) includes a flux concentrator to direct magnetic fields and increase the efficiency of torque transfer from the axial flux electric motor to the propeller.

Example 20: The marine POD drive unit (1) of example 19, wherein the flux concentrator is made of a material with high magnetic permeability to enhance the focusing of magnetic fields.

Example 21: The marine POD drive unit (1) of any of the examples 1-20, wherein the magnetic gear assembly (8) comprises a magnetic field modulation mechanism to dynamically control the magnetic coupling between the axial flux electric motor and the propeller.

Example 22: The marine POD drive unit (1) of example 21, wherein the magnetic field modulation mechanism comprises a variable reluctance structure.

Example 23: The marine POD drive unit (1) of example 21, wherein the magnetic field modulation mechanism comprises a magnet arrangement that allows for adjustable overlapping areas between the magnets of the different rotors.

Example 24: The marine POD drive unit (1) of any of the examples 1-23, wherein the magnetic gear assembly (8) is configured such that the magnetic field lines are predominantly parallel to the rotational axis, minimizing radial flux leakage.

Example 25: The marine POD drive unit (1) of example 24, wherein the magnetic field lines are shaped to minimize eddy current losses in the surrounding structures.

Example 26: The marine POD drive unit (1) of any of the examples 1-25, wherein the magnetic gear assembly (8) comprises adjustable magnet positions to allow for variable gear ratios depending on the operational requirements.

Example 27: The marine POD drive unit (1) of any of the examples 1-26, wherein the axial flux electric motor (3) is a permanent magnet synchronous motor (PMSM).

Example 28: The marine POD drive unit (1) of any of the examples 1-27, wherein the magnetic gear assembly (8) further comprises a cooling system to dissipate heat generated during operation.

Example 29: The marine POD drive unit (1) of example 28, wherein the cooling system utilizes a liquid coolant circulated through channels within the magnetic gear assembly.

Example 30: The marine POD drive unit (1) of any of the examples 1-4, wherein the magnetic gear assembly (8) is a radial magnetic gear (8), comprising inner and outer rotors (18, 19) with magnets oriented radially to facilitate the torque transfer.

Example 31: The marine POD drive unit (1) of example 30, wherein the radial magnetic gear assembly (8) further comprises a modulator (13) with ferromagnetic pole pieces (14) positioned between the inner and outer rotors (18, 19) to modulate the magnetic field.

Example 32: The marine POD drive unit (1) of example 31, wherein the ferromagnetic pole pieces (14) are shaped to minimize torque ripple.

Example 33: The marine POD drive unit (1) of any of the examples 30-32, wherein the magnets (15, 16) on the inner and outer rotors (18, 19) are arranged in a Halbach array to enhance the magnetic field strength and increase torque density.

Example 34: The marine POD drive unit (1) of any of the examples 30-33, wherein the inner rotor (18) is directly connected to the output shaft (9) of the axial flux electric motor (3) and the outer rotor is directly connected to the propeller, the propeller shaft or the hub.

Example 35: The marine POD drive unit (1) of any of the examples 30-34, wherein the magnetic gear assembly (8) is configured to provide a gear ratio of at least 10:1.

Example 36: The marine POD drive unit (1) of any of the examples 30-35, wherein the radially magnetic gear assembly (8) is a floating field-modulated magnetic gear set (8).

Example 37: The marine POD drive unit (1) of example 36, wherein the floating field-modulated magnetic gear set (8) is configured to allow for slight axial and radial displacement between the rotors.

Example 38: The marine POD drive unit (1) of any of the examples 30-37, further comprising a forward propeller (5') having a first shaft (20), and an aft propeller (5") having a second shaft (21), the propellers (5', 5") being driven by the axial flux electric motor (3), where the floating field-modulated magnetic gear set (8) is arranged between the output shaft (9) and the first and second shafts (20, 21), where the field-modulated magnetic gear set (8) comprises the inner rotor (18), the outer rotor (19) and a third rotor or manipulator (13) arranged between the inner and outer rotors (18, 19), wherein the output shaft (9) is connected to one of the rotors (18, 19, 13) and the first shaft and the second shaft (20, 21) are connected to the other rotors (18, 19, 13).

Example 39: The marine POD drive unit (1) of example 38, where the inner rotor (18) is equipped with first permanent magnets (15), the outer rotor (19) is equipped with second permanent magnets (16), and the third rotor or manipulator (13) is equipped with pole pieces (14).

Example 40: The marine POD drive unit (1) of any of the examples 38-39, where the inner rotor (18) is equipped with 2P1 permanent magnets (15), the outer rotor (19) is equipped with 2P2 permanent magnets (16), and the third rotor or manipulator (13) is equipped with P3 pole pieces (14).

Example 41: The marine POD drive unit (1) of any of the examples 38-40, where the third rotor or manipulator (13) is configured to modulate the magnetic fields between the inner and outer rotors (18, 19).

Example 42: The marine POD drive unit (1) of any of the examples 38-41, where an intrinsic gear ratio Gr is defined by Gr=P3/P1, wherein P3=P1+P2.

Example 43: The marine POD drive unit (1) of example 42, wherein the intrinsic gear ratio Gr is dynamically adjustable.

Example 44: A marine vessel (100) comprising a marine POD drive unit (1) of any of the examples 1-43.

Example 45: A method for propelling a marine vessel (100), comprising:
- arranging an axial flux electric motor (3) inside a housing (2) of a marine POD drive unit (1), the axial flux electric motor (3) configured to generate rotational motion at a first rotational speed;
- configuring a propeller (5) to operate at a second rotational speed lower than the first rotational speed;
- positioning a magnetic gear assembly (8) comprising a plurality of magnets (15, 16) between the axial flux electric motor (3) and the propeller (5) within the housing; and
- transferring torque from the axial flux electric motor (3) to the propeller (5) via the magnetic gear assembly (8), while downshifting the rotational speed from the first rotational speed to the second rotational speed.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A marine POD drive unit (1) for a marine vessel (100), comprising a housing (2),
an axial flux electric motor (3) being arranged inside the housing (2), the axial flux electric motor configured to generate rotational motion at a first rotational speed,
a propeller (5) configured to operate at a second rotational speed lower than the first rotational speed,
a magnetic gear assembly (8) positioned between the axial flux electric motor and the propeller, the magnetic gear assembly comprises a plurality of magnets (15, 16),
wherein the magnetic gear assembly (8) is configured to transfer torque from the axial flux electric motor (3) to the propeller (5) while downshifting the rotational speed from the first rotational speed to the second rotational speed.

2. The marine POD drive unit (1) of claim 1, wherein the axial flux electric motor (3) comprises an output shaft (9).

3. The marine POD drive unit (1) of any of the claims 1-2, wherein the propeller (5) is connected to a propeller shaft or a hub (10).

4. The marine POD drive unit (1) of any of the claims 1-3, wherein the magnetic gear assembly (8) is arranged between the output shaft (9) and the propeller shaft or hub (10).

5. The marine POD drive unit (1) of any of the claims 1-4, wherein the magnetic gear assembly (8) is an axial magnetic gear assembly (8), comprising coaxially aligned rotors (11, 12) with magnets (15, 16) oriented axially to enable torque transfer.

6. The marine POD drive unit (1) of claim 5, wherein the axial magnetic gear assembly (8) comprises a first rotor (11) connected to the axial flux electric motor (3) and a second rotor (12) connected to the propeller, with a modulator (13) positioned between the first and second rotors.

7. The marine POD drive unit (1) of any of the claims 1-6, further comprising a control unit (17).

8. The marine POD drive unit (1) of claim 7, wherein the control unit (17) is configured to adjust the magnetic field strength of the magnetic gear assembly (8) to optimize torque transfer efficiency based on operational conditions.

9. The marine POD drive unit (1) of any of the claims 1-8, wherein the magnetic gear assembly (8) comprises a magnetic field modulation mechanism to dynamically control the magnetic coupling between the axial flux electric motor and the propeller.

10. The marine POD drive unit (1) of any of the claims 1-4, wherein the magnetic gear assembly (8) is a radial magnetic gear (8), comprising inner and outer rotors (18, 19) with magnets oriented radially to facilitate the torque transfer.

11. The marine POD drive unit (1) of claim 10, wherein the radial magnetic gear assembly (8) further comprises a modulator (13) with ferromagnetic pole pieces (14) positioned between the inner and outer rotors (18, 19) to modulate the magnetic field.

12. The marine POD drive unit (1) of any of the claims 10-11, wherein the inner rotor (18) is directly connected to the output shaft (9) of the axial flux electric motor (3) and the outer rotor is directly connected to the propeller, the propeller shaft or the hub.

13. The marine POD drive unit (1) of any of the claims 10-12, wherein the radially magnetic gear assembly (8) is a floating field-modulated magnetic gear set (8).

14. The marine POD drive unit (1) of any of the claims 10-13, further comprising a forward propeller (5') having a first shaft (20), and an aft propeller (5") having a second shaft (21), the propellers (5', 5") being driven by the axial flux electric motor (3),
where the floating field-modulated magnetic gear set (8) is arranged between the output shaft (9) and the first and second shafts (20, 21),
where the field-modulated magnetic gear set (8) comprises the inner rotor (18), the outer rotor (19) and a third rotor or manipulator (13) arranged between the inner and outer rotors (18, 19),
wherein the output shaft (9) is connected to one of the rotors (18, 19, 13) and the first shaft and the second shaft (20, 21) are connected to the other rotors (18, 19, 13).

15. A marine vessel (100) comprising a marine POD drive unit (1) of any of the claims 1-14.
